# EUROPÄISCHE PATENTSCHRIFT

(11) **EP 3 831 650 B1**
(45) Veröffentlichungstag und Bekanntmachung des Hinweises auf die Patenterteilung: **20.07.2022**
(21) Anmeldenummer: 20207454.8
(22) Anmeldetag: 13.11.2020
(51) Int. Cl.: B60N 2/75

(54) **AUSSTATTUNGSVORRICHTUNG**
FURNISHING EQUIPMENT
DISPOSITIF D'AMÉNAGEMENT

(30) Priorität: 05.12.2019 DE 102019133258
(43) Veröffentlichungstag der Anmeldung: 09.06.2021
(73) Patentinhaber: GRAMMER AG, 92289 Ursensollen (DE)
(72) Erfinder: Nuss, Ralph, 92284 Poppenricht (DE)
(74) Vertreter: Roche, von Westernhagen & Ehresmann

(56) Entgegenhaltungen:
- KR-B1- 101 024 096
- US-B1- 9 156 385

## Beschreibung

Die Erfindung betrifft eine Ausstattungsvorrichtung eines Fahrzeugs. Fahrzeug ist im Sinne der Erfindung ein Land-, Luft- oder Wasserfahrzeug. Die Ausstattungsvorrichtung umfasst eine Basis und ein relativ zu der Basis bewegbares Verstellteil. Mittels einer Verriegelungsvorrichtung ist das Verstellteil in unterschiedlichen Positionen bezüglich wenigstens einer Bewegungsrichtung verriegelbar.

Eine solche Fahrzeugausstattungsvorrichtung ist z.B. eine Fahrzeugkonsole mit einer karosseriefesten oder sitzfesten Basis und einer schwenkbar an der Basis gelagerten Armauflage, die zwischen unterschiedlichen Neigepositionen verstellbar und stufenweise in den eingestellten Positionen verriegelbar ist. Die Armauflage weist einen Riegel auf, welcher mit einer Verzahnung derart zusammenwirkt, dass die Armauflage aus einer unteren Endposition in Richtung einer oberen Endposition aufwärts bewegbar ist, wobei eine abwärtsbewegung der Armauflage aber nicht möglich ist. Eine Steuerung der Armlehne, schaltet in der oberen Endposition den Riegel außer Eingriff mit der Verzahnung, so dass eine Abwärtsbewegung in die untere Endposition möglich ist. Das Dokument US9156385 offenbart eine Armauflage eines Fahrzeugs mit einer Basis und einem relativ zu der Basis rotatorisch bewegbaren Verstellteil.

Es war Aufgabe der Erfindung eine Ausstattungsvorrichtung zu schaffen, welche eine Steuerung für die Verriegelungsvorrichtung aufweist, wobei die Steuerung einen einfachen Aufbau aufweisen soll.

Die Aufgabe wurde gelöst durch eine Ausstattungsvorrichtung mit den Merkmalen des Anspruchs 1.

Die Ausstattungsvorrichtung umfasst eine Basis und ein relativ zu der Basis bewegbares Verstellteil. Das Verstellteil ist z.B. rotatorisch oder translatorisch bewegbar oder führt eine gemischte Bewegung mit translatorischen und rotatorischen Anteilen durch. Das Verstellteil ist entlang einer Bahn zwischen einer ersten Endposition und einer zweiten Endposition bewegbar. Z. B. ist das Verstellteil schwenkbar zwischen der ersten Endposition und der zweiten Endposition bewegbar gelagert. Alternativ ist das Verstellteil z.B. verschiebbar gelagert.

Mittels einer Verriegelungsvorrichtung mit dem Verstellteil zugeordneten ersten Verriegelungsmitteln und der Basis zugeordneten zweiten Verriegelungsmitteln ist das Verstellteil in wenigstens einer Position verriegelbar. Die Verriegelungsvorrichtung ist zwischen einer Riegelposition und einer Löseposition bewegbar. In der Riegelposition ist das Verstellteil in wenigstens eine Richtung unbewegbar verriegelt. D.h., es ist z.B. bezüglich beider Bewegungsrichtungen unbewegbar verriegelt oder alternativ ist es z.B. bezüglich einer Bewegungsrichtung unbewegbar verriegelt und in eine entgegengesetzte Bewegungsrichtung ist es bewegbar. In der Löseposition ist das Verstellteil in beide Bewegungsrichtungen bewegbar.

Da die Riegelposition und die Löseposition der Verriegelungsvorrichtung von der Stellung der Verriegelungsmittel zueinander abhängt werden die Begriffe Riegelposition und Löseposition auch für die Relativposition der Verriegelungsmittel verwendet. Die Verriegelungsmittel stehen in der Riegelposition derart in Eingriff, dass eine Bewegung des Verstellteils wie oben erläutert verhindert wird. Bei einer stufenweisen Verriegelung, z.B. indem eine Klinke in Aussparungen der Gegenstruktur eingreifen kann, die in Abständen an einer Bahn angeordnet sind, befinden sich die Verriegelungsmittel z.B. auch dann in der Riegelposition, wenn die Möglichkeit besteht, sich in eine Aussparung zu bewegen, z.B. die Klinke sich aber noch in Kontakt mit einer Fläche zwischen den Aussparungen befindet.

Die Verriegelungsvorrichtung wirkt mit einer Steuervorrichtung mit dem Verstellteil zugeordneten ersten Steuermitteln und der Basis zugeordneten zweiten Steuermitteln zusammen, mit welchen die Verriegelungsvorrichtung in Abhängigkeit der Position des Verstellteils zwischen einer Riegelposition und einer Löseposition verstellbar ist.

Die einen Steuermittel umfassen wenigstens ein an einem ersten Endbereich der Bahn angeordnetes erstes Schaltelement und die anderen Steuermittel umfassen wenigstens ein an einem zweiten Endbereich der Bahn angeordnetes zweiten Schaltelement. Die Schaltelemente bilden zumindest einen Teil der einen Steuermittel, d.h. der ersten Steuermittel oder der zweiten Steuermittel, aus. Mittels jedes Schaltelements ist eine relativ zu dem Schaltelement bewegbare Stelleinrichtung derart betätigbar, dass die mit der Stelleinrichtung wirkverbundenen Verriegelungsmittel zwischen einer Riegelposition und einer Löseposition bewegbar sind. Die Stelleinrichtung bildet zumindest einen Teil der anderen Steuermittel, d.h. der zweiten Steuermittel oder der ersten Steuermittel, aus.

Die Verriegelungsmittel können z.B. sowohl einen formschlüssig in eine Gegenstruktur eingreifenden Riegel, als auch alternativ eine kraftschlüssig mit einer Gegenstruktur zusammenwirkende Bremse umfassen, die auf einem Klemm- oder Reibprinzip beruht. Die Verriegelungsmittel könnten z.B. von wenigstens einer Klemmbacke gebildet sein, die mit einer Klemmfläche zusammenwirkt. Mit anderen Worten, der Begriff "Verriegelungsmittel" soll die zusammenwirkenden Verriegelungsstrukturen zwischen Basis und Verstellteil nicht auf formschlüssig zusammenwirkende Strukturen beschränken.

Die Stelleinrichtung ist z.B. zwischen einer Betätigungsposition und einer Freigabeposition bewegbar, wobei die Verriegelungsmittel in der Betätigungsposition in der Löseposition und in der Freigabeposition in der Riegelposition angeordnet ist. In der Freigabeposition sind die Verriegelungsmittel z.B. unbetätigt und werden von einer Rückstellvorrichtung in Eingriff mit den anderen Verriegelungsmitteln belastet.

Die Stelleinrichtung umfasst z.B. wenigstens eine Stellstruktur, die mit dem Riegel zusammenwirkt, und wenigstens eine Schaltstruktur, die mit wenigstens einem Schaltelement zusammenwirkt. Die Stellstruktur und die Schaltstruktur sind miteinander bewegungsverbunden. Auf diese Weise wird die aus dem Zusammenwirken der Schaltstruktur mit dem Schaltelement resultierende Bewegung der Stelleinrichtung auf die Stellstruktur übertragen, welche die Verriegelungsmittel zwischen der Riegelposition und der Löseposition bewegt.

Es können z.B. wenigstens zwei Stellstrukturen und / oder wenigstens zwei Schaltstrukturen vorgesehen sein. In diesem Fall ist es möglich für jedes Schaltelement eine gesonderte Schaltstruktur an der Stelleinrichtung vorzusehen.

Z.B. wirken wenigstens eine erste Schaltstruktur mit einem ersten Schaltelement und wenigstens eine zweite Schaltstruktur mit einem zweiten Schaltelement der Stelleinrichtung zusammen. Die Bewegungen der Stelleinrichtung in die Betätigungsposition und in die Freigabeposition können dann separat voneinander gesteuert werden.

Z.B. ist die Stelleinrichtung um eine Drehachse drehbar ausgebildet. Die Stelleinrichtung kann dann mit geringem Bauraum konstruiert sein. Darüber hinaus ist es möglich, mittels einer geringen Drehung die Stelleinrichtung zwischen der Betätigungsposition und der Freigabeposition zu bewegen.

Im Falle, dass die Stelleinrichtung drehbar ausgebildet ist, sind z.B. wenigstens zwei Stellstrukturen und / oder wenigstens zwei Schaltstrukturen bezüglich der Drehachse in Umfangsrichtung oder axial zueinander versetzt angeordnet. Die Stellstrukturen und / oder die Schaltstrukturen sind z.B. fest mit der Drehachse verbunden. In umfangsrichtung versetzt angeordnete Schaltstrukturen und / oder axial versetzt angeordnete Schaltstrukturen sind z.B. einem Element zugeordnet.

Bei einem Versatz in Umfangsrichtung sind redundante Mittel vorhanden, die bei einem unbeabsichtigen Drehen der Stelleinrichtung die Funktions der Steuervorrichtung sicherstellen.

Z.B. sind wenigstens eine Stellstruktur und wenigstens eine Schaltstruktur axial versetzt, d.h. in Richtung parallel zu der Drehachse der Stelleinrichtung versetzt auf der Drehachse angeordnet. Das kann z.B. der Fall sein, wenn ein erster Schaltelement mit wenigstens einer ersten Schaltstruktur in einer ersten Raumebene zusammenwirkt und ein zweiter Schaltelement mit wenigstens einer zweiten Schaltstruktur in einer zweiten Raumebene zusammenwirkt. Die die erste Raumebene und die zweite Raumebene sind z.B. parallel.

Die Stelleinrichtung umfasst z.B. eine Positioniervorrichtung, welche die Stelleinrichtung in der jeweils eingestellten Position hält. Mittels der Positioniereinrichtung wird verhindert, dass sich die Stelleinrichtung unbeabsichtigt aus der eingestellten Betätigungsposition oder Freigabeposition bewegt.

Die Positioniereinrichtung ist z.B. von einer Rastvorrichtung gebildet, die erste Rastmittel in Form einer Feder und zweite Rastmittel in Form eines Rastsitzes für die Feder umfasst, wobei die einen Rastmittel mit der Stelleinrichtung bewegungsverbunden sind und die anderen Rastmittel mit dem Verstellteil oder mit der Basis fest verbunden sind. Z.B. sind wenigstens zwei Rastsitze mit der Stelleinrichtung bewegungsverbunden, wobei ein erster Rastsitz mit der Feder zusammenwirkt, um die Stelleinrichtung in der Betätigungsposition zu halten und ein zweiter Rastsitz mit der Feder zusammenwirkt, um die Stelleinrichtung in der Freigabeposition zu halten. Wenn die Stelleinrichtung mehrere Stellstrukturen, z.B. zwei Stellstrukturen, umfasst, können ebenfalls mehrere, erste Rastsitze, z.B. zwei erste Rastsitze, und mehrere zweite Rastsitze, z.B. zwei zweite Rastsitze, vorhanden sein.

Die Ausstattungvorrichtung umfasst z.B. eine Bremsvorrichtung, welche die Bewegung des Verstellteils in wenigstens eine Richtung bremst. Die Bremsvorrichtung umfasst erste dem Verstellteil zugeordnete Bremsmittel und zweite der Basis zugeordnete Bremsmittel. Wenn sich die Verriegelungsvorrichtung in der Löseposition befindet, wird auf diese Weise gewährleistet, dass eine kontrollierte Bewegung des z.B. von einer Feder oder der Gewichtskraft belasteten Verstellteils stattfindet.

Ist das Verstellteil z.B. eine Armauflage einer Armlehne, wird mittels der Bremsvorrichtung verhindert, dass sich die Armauflage nach dem Verstellen der Verriegelungsvorrichtung in die Löseposition schlagartig aus der oberen Position in die untere Position bewegt. Die Bremsvorrichtung gewährleistet ein langsames kontrolliertes Absenken. Die Bremsvorrichtung kann z.B. eine Fettbremse mit einem Medium hoher Viskosität aufweisen. Die einen Bremsmittel der Bremsvorrichtung umfassen z.B. eine Zahnschiene, die sich entlang der Bahn erstreckt und die anderen Bremsmittel umfassen z.B. ein Zahnrad, welches auf der Zahnschiene abrollt und von der Fettbremse gebremst wird.

Die Ausstattungsvorrichtung ist z.B. eine Fahrzeugarmlehne und das Verstellteil eine Armauflage, die relativ zu einer karosseriefesten Basis bewegbar, z.B. schwenkbar ist. Die Armauflage ist zwischen einer unteren ersten Endposition und einer oberen zweiten Endposition bewegbar. Wird die Armauflage aus der unteren Endposition nach oben bewegt, befindet sich die Verriegelungsvorrichtung z.B. in der Riegelposition, in welcher eine Bewegung in Richtung der zweiten Endposition (nach oben ) möglich ist, eine Bewegung in Richtung der ersten Endposition (nach unten) aber verhindert wird. Im Bereich der oberen Endposition wird die Verriegelungsvorrichtung z.B. von der Steuervorrichtung in die Löseposition verstellt, in welcher eine Bewegung in Richtung der ersten Endposition möglich ist. Im Bereich der unteren Endposition wird die Verriegelungsvorrichtung z.B. von der Steuervorrichtung in die Riegelposition verstellt, in welcher eine Bewegung der Armauflage in Richtung der zweiten Endposition möglich, in Richtung der ersten Endposition aber verhindert ist.

Ein Ausführungsbeispiel der Erfindung ist in der nachfolgenden Figurenbeschreibung, auch unter Bezugnahme auf die schematischen Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug auf ein Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

Es zeigen:
Fig. 1a eine perspektivische Darstellung einer Mittelkonsole als Ausstattungsvorrichtung im Sinne der Erfindung von schräg vorne,
Fig. 1b eine perspektivische Darstellung der Mittelkonsole gemäß Fig. 1a, wobei eine Armauflage der Mittelkonsole in Fig. 1 lediglich in Form einer gestrichelten Linie angedeutet ist und wobei eine vordere Wand der Basis der Übersichtlichkeit halber nicht montiert ist,
Fig. 2a eine Seitenansicht der Mittelkonsole gemäß Fig. 1, wobei die Mittelkonsole gläsern dargestellt ist, so dass Teile einer im Innern der Außenwände befindlichen Verriegelungsvorrichtung erkennbar sind,
Fig. 2b eine Ausschnittdarstellung gemäß Ausschnitt A in Fig. 2a,
Fig. 3 eine perspektivische Ansicht von Teilen der Verriegelungsvorrichtung von vorne schräg rechts, in einer ersten Endposition des Verstellteils,
Fig. 4 eine perspektivische Ansicht von Teilen der Verriegelungsvorrichtung von vorne schräg links, in einer ersten Endposition des Verstellteils,
Fig. 5 eine Draufsicht auf Teile der Verriegelungsvorrichtung, in einer ersten Endposition des Verstellteils, im vorliegenden Fall einer unteren Endposition der Armauflage,
Fig. 6 eine perspektivische Darstellung einer Stelleinrichtung der Verriegelungsvorrichtung,
Fig. 7 eine Schnittdarstellung gemäß Schnittlinie D - D in Fig. 5,
Fig. 8 eine Schnittdarstellung gemäß Schnittlinie E - E in Fig. 5,
Fig. 9 eine Schnittdarstellung gemäß Schnittlinie A - A in Fig. 5,
Fig. 10 eine Schnittdarstellung gemäß Schnittlinie B - B in Fig. 5,
Fig. 11 eine Schnittdarstellung gemäß Schnittlinie C - C in Fig. 5,
Fig. 12 in Anlehnung an Fig. 8 die Verriegelungsvorrichtung, wobei das Verstellteil weiter in Richtung der zweiten Endposition bewegt ist,
Fig. 13 in Anlehnung an Fig. 8 die Verriegelungsvorrichtung, wobei das Verstellteil in einer mittleren Position zwischen der ersten Endposition und der zweiten Endposition verriegelt ist,
Fig. 14 in Anlehnung an Fig. 8 die Verriegelungsvorrichtung, wobei das Verstellteil kurz vor Erreichen einer oberen Endposition angeordnet ist,
Fig. 15 eine Schnittdarstellung der Verriegelungsvorrichtung in Anlehnung an Fig. 7, wobei sich das Verstellteil in der Position gemäß Fig. 14 befindet,
Fig. 16 eine Schnittdarstellung der Verriegelungsvorrichtung in Anlehnung an Fig. 9, wobei sich das Verstellteil in der Position gemäß Fig. 14 befindet,
Fig. 17 eine Schnittdarstellung der Verriegelungsvorrichtung in Anlehnung an Fig. 10, wobei sich das Verstellteil in der Position gemäß Fig. 14 befindet,
Fig. 18 eine Schnittdarstellung der Verriegelungsvorrichtung in Anlehnung an Fig. 11, wobei sich das Verstellteil in der Position gemäß Fig. 14 befindet,
Fig. 19 eine Schnittdarstellung der Verriegelungsvorrichtung in Anlehnung an Fig. 7, wobei sich das Verstellteil in einer oberen Endposition befindet,
Fig. 20 eine Schnittdarstellung der Verriegelungsvorrichtung in Anlehnung an Fig. 8, wobei sich das Verstellteil in einer oberen Endposition befindet,
Fig. 21 eine Schnittdarstellung der Verriegelungsvorrichtung in Anlehnung an Fig. 9, wobei sich das Verstellteil in der oberen Endposition befindet,
Fig. 22 eine Schnittdarstellung der Verriegelungsvorrichtung in Anlehnung an Fig. 11, wobei sich das Verstellteil in der oberen Endposition befindet,
Fig. 23 eine Schnittdarstellung der Verriegelungsvorrichtung in Anlehnung an Fig. 8, wobei sich das Verstellteil in der oberen Endposition befindet,
Fig. 24 eine Schnittdarstellung der Verriegelungsvorrichtung in Anlehnung an Fig. 7, wobei sich das Verstellteil in einer mittleren Position zwischen der ersten Endposition und der zweiten Endposition befindet,
Fig. 25 eine Schnittdarstellung der Verriegelungsvorrichtung in Anlehnung an Fig. 8, wobei sich das Verstellteil in einer mittleren Position zwischen der ersten Endposition und der zweiten Endposition befindet,
Fig. 26 eine Schnittdarstellung der Verriegelungsvorrichtung in Anlehnung an Fig. 9, wobei sich das Verstellteil in einer mittleren Position zwischen der ersten Endposition und der zweiten Endposition befindet,
Fig. 27 eine Schnittdarstellung der Verriegelungsvorrichtung in Anlehnung an Fig. 10, wobei sich das Verstellteil in einer mittleren Position zwischen der ersten Endposition und der zweiten Endposition befindet,
Fig. 28 eine Schnittdarstellung der Verriegelungsvorrichtung in Anlehnung an Fig. 11, wobei sich das Verstellteil in einer mittleren Position zwischen der ersten Endposition und der zweiten Endposition befindet,
Fig. 29 eine Schnittdarstellung der Verriegelungsvorrichtung in Anlehnung an Fig. 7, wobei sich das Verstellteil kurz vor Erreichen der unteren Endposition befindet,
Fig. 30 eine Schnittdarstellung der Verriegelungsvorrichtung in Anlehnung an Fig. 8, wobei sich das Verstellteil kurz vor Erreichen der unteren Endposition befindet,
Fig. 31 eine Schnittdarstellung der Verriegelungsvorrichtung in Anlehnung an Fig. 9, wobei sich das Verstellteil kurz vor Erreichen der unteren Endposition befindet,
Fig. 32 eine Schnittdarstellung der Verriegelungsvorrichtung in Anlehnung an Fig. 10, wobei sich das Verstellteil kurz vor Erreichen der unteren Endposition befindet,
Fig. 33 eine Schnittdarstellung der Verriegelungsvorrichtung in Anlehnung an Fig. 11, wobei sich das Verstellteil kurz vor Erreichen der unteren Endposition befindet.
Fig. 34 in Anlehnung an Fig. 2a eine gläserne Seitenansicht eines zweiten Ausführungsbeispiels eines erfindungsgemäßen Ausstattungsteils in Form einer Mittelkonsole
Fig. 35 eine Ausschnittdarstellung gemäß Ausschnittlinie F in Fig. 34.

Die Ausstattungsvorrichtung insgesamt, ist in den Fig. mit dem Bezugszeichen 10 bezeichnet.

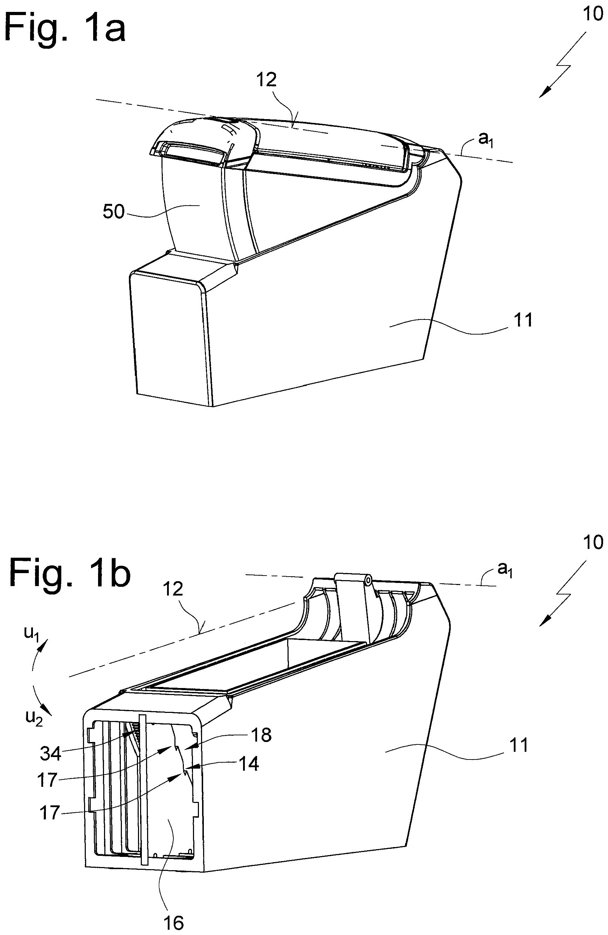

Die Ausstattungsvorrichtung 10 umfasst gemäß der Fig. 1a und 1b eine Basis 11, und ein Verstellteil 12, welches im vorliegenden Ausführungsbeispiel von einer um eine Schwenkachse a1 schwenkbaren Armauflage einer Mittelkonsole gebildet ist. Das Verstellteil 12 ist in Fig. 1b der Übersichtlichkeit halber lediglich mittels einer gestrichelten Linie angedeutet. Die Basis 11 ist hier von dem Korpus der Mittelkonsole gebildet, welche karosseriefest an einem Fahrzeug befestigt ist.

Das Verstellteil 12 ist um die Schwenkachse a1 in die Richtungen u1 und u2 schwenkbar und in unterschiedlichen Gebrauchspositionen derart mittels einer Verriegelungsvorrichtung 13 lösbar verriegelbar, dass - in einer Riegelposition der Verriegelungsvorrichtung 13 - ein Schwenken in Richtung u1 möglich ist, in Richtung u2 aber verhindert wird. In der Löseposition der Verriegelungsvorrichtung 13 ist eine Bewegung in die Richtungen u1 und u2 möglich.

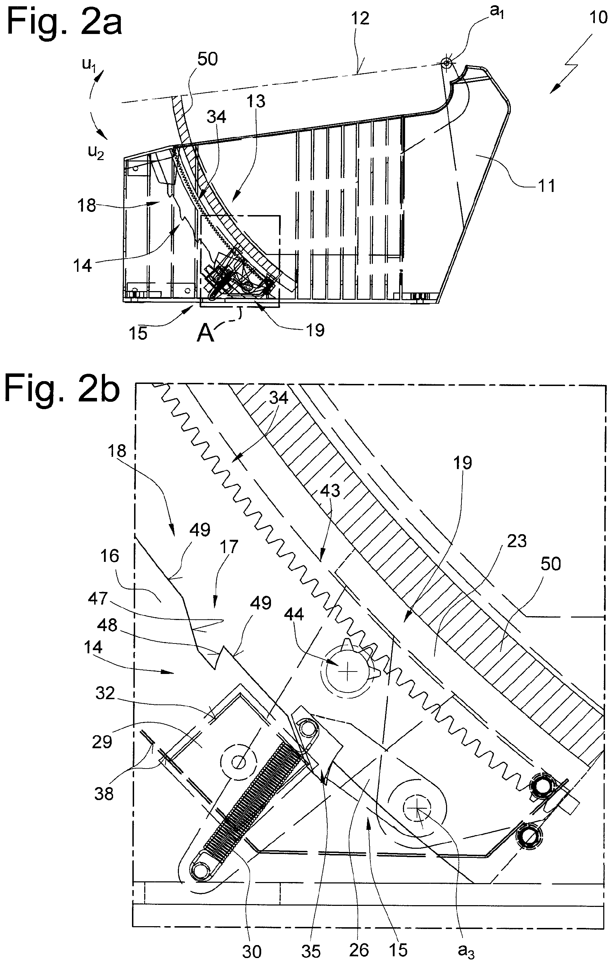

In der Seitenansicht der Ausstattungsvorrichtung 10 gemäß Fig. 2a ist die Basis 11 gläsern dargestellt, so dass Teile der Verriegelungsvorrichtung 13 erkennbar sind. Die Verriegelungsvorrichtung 13 umfasst dem Verstellteil 12 zugeordnete erste Verriegelungsmittel 15 und der Basis 11 zugeordnete zweite Verriegelungsmittel 14. Die zweiten Verriegelungsmittel 14 umfassen hier eine Wand 16 mit Verriegelungsstrukturen, vorliegend in Form einer Anordnung 18, welche mehrere Aussparungen 17 und eine Fläche 49 zwischen den Aussparungen 17 umfasst. Die Wand 16 ist unbewegbar fest an der Basis 11 gehalten.

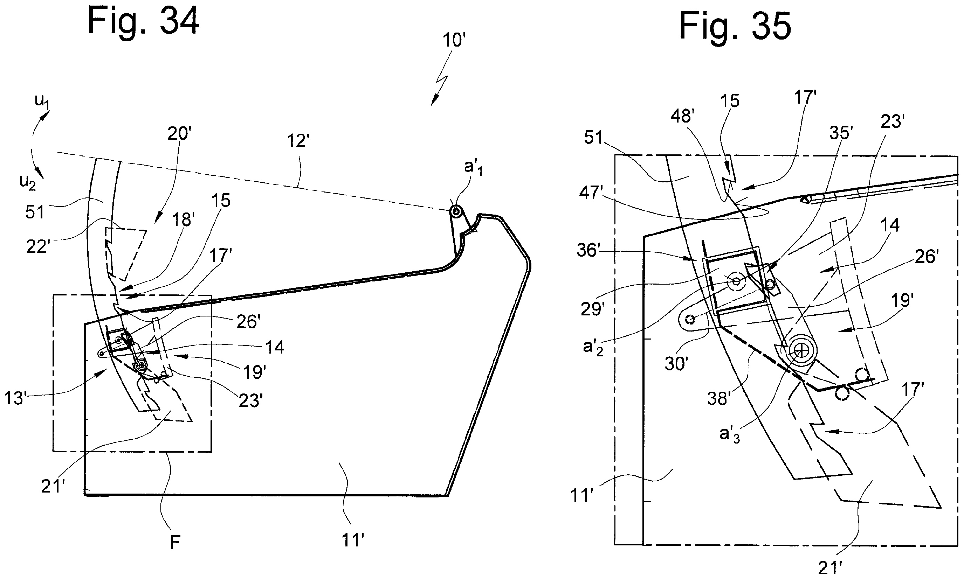

Die zweiten Verriegelungsmittel 14 wirken mit den ersten Verriegelungsmitteln 15 zusammen, die vorliegend einen um eine Schwenkachse a3 schwenkbaren Riegel umfassen, welcher lösbar in Eingriff mit jeder der Aussparungen 17 gebracht werden kann. Der Riegel 26 ist im vorliegenden Ausführungsbeispiel Teil einer Baugruppe 19, die an dem Verstellteil 12 befestigt ist. Alternativ wäre es ebenso möglich, die Baugruppe 19 fest an der Basis 11 anzuordnen und die Anordnung 18 mit dem Verstellteil 12 zu verbinden, so dass sie mit dem Verstellteil 12 bewegbar ist, was in einem zweiten Ausführungsbeispiel gemäß der Fig. 34 und 35 dargestellt ist.

Die zusammenwirkenden Verriegelungsstrukturen sind bei dem vorliegenden Ausführungsbeispiel von Formschlussmitteln gebildet. Es sei hier aber ausdrücklich darauf hingewiesen, dass anstelle der Formschlussmittel alternativ kraftschlüssig wirkende Strukturen verwendbar sind.

Die Verriegelungsvorrichtung 13 ist zwischen der Riegelposition, in welcher der Riegel 26 in Eingriff mit der Anordnung 18 steht und einer Löseposition, in welcher der Riegel 26 außer Eingriff mit der Anordnung 18 steht, bewegbar. Der an dem Verstellteil 12 gehaltene Riegel 26 ist z.B. in Fig. 2b erkennbar. Die Baugruppe 19 umfasst auch eine Rückstelleinrichtung 30, die den Riegel 26 in Eingriff mit der Anordnung 18 belastet.

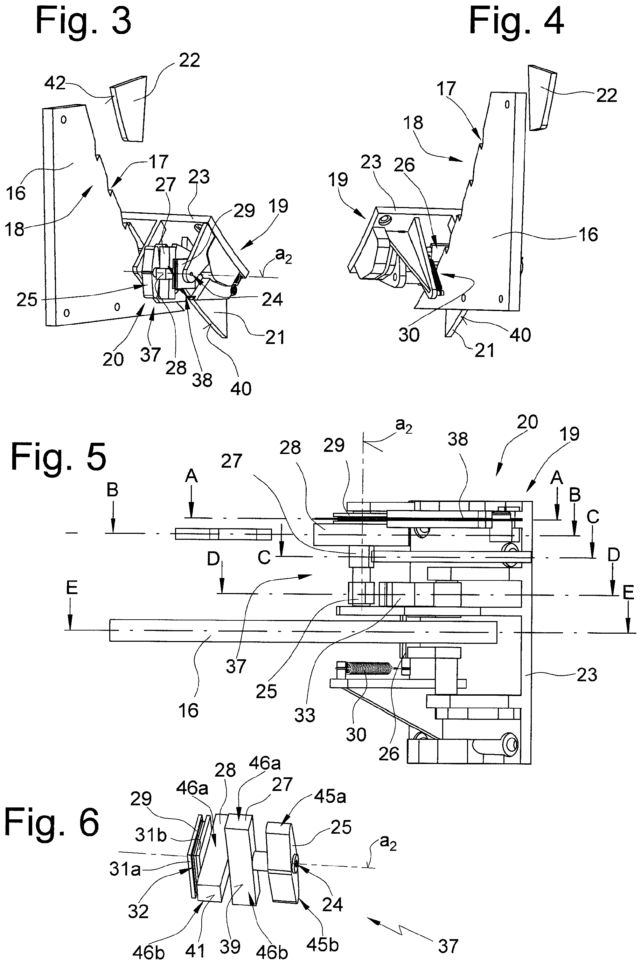

Ferner umfasst die Baugruppe 19 eine Stelleinrichtung 37 einer Steuervorrichtung 20 (siehe z.B. Fig. 3), welche zur Betätigung des Riegels 26 in Abhängigkeit der Position des Verstellteils 12 vorgesehen ist. Die Steuervorrichtung 20 schaltet den Riegel 26 in Eingriff oder außer Eingriff mit der Anordnung 18 und hält den Riegel 26 in der eingestellten Position.

In den Fig. 3 und 4 ist die Verriegelungsvorrichtung 13 ohne die Basis 11 und das Verstellteil 12 dargestellt. Wie in den Fig. 3 und 4 erkennbar ist, umfasst die Steuervorrichtung 20 ein erstes Schaltelement 21 mit einer Steuerfläche 40 an einem ersten Endbereich der Bewegungsbahn der Baugruppe 19 und ein zweites Schaltelement 22 mit einer Steuerfläche 42 an einem zweiten Endbereich der Bewegungsbahn der Baugruppe 19. Die Schaltelemente 21 und 22 sind Teil der Steuervorrichtung 20 und sind fest mit der Basis 11 verbunden und zum Umschalten der Verriegelungsvorrichtung 13 zwischen der Riegelposition und der Löseposition vorgesehen.

In Fig. 3 ist ferner ein Halteelement 23 der Baugruppe 19 erkennbar. Das Halteelement 23 ist an einer Wand 50 des Verstellteils 12 befestigt und schwenkt zusammen mit dem Verstellteil 12 um die Drehachse a1. An dem Halteelement 23 ist eine Achse 24 mit der geometrischen Drehachse a2 der Stelleinrichtung 37 drehbar gelagert. Mit der Achse 24 drehfest verbunden ist eine Stellstruktur 25, hier in Form eines Nockens, welche mit dem Riegel 26 zusammenwirkt, der in Fig. 4 erkennbar ist. Mittels der Stellstruktur 25 ist der Riegel 26 zwischen der Riegelposition und der Löseposition bewegbar. Der Riegel 26 ist um die Schwenkachse a3 schwenkbar an dem Halteelement 23 gelagert.

Mit der Achse 24 sind außerdem eine erste Schaltstruktur 27, eine zweite Schaltstruktur 28 der Steuervorrichtung 20 und ein Rastelement 29 einer Positioniereinrichtung 36 der Stelleinrichtung 37 drehfest verbunden. Die erste Schaltstruktur 25 wirkt mit der Steuerfläche 40 des ersten Schaltelements 21 und die zweite Schaltstruktur 28 wirkt mit der Steuerfläche 42 des zweiten Schaltelements 22 zusammen. Die erste Schaltstruktur 27 und die zweite Schaltstruktur 28 sind hier jeweils in Form eines Arms ausgebildet, wobei die Längsachse m1 der Schaltstruktur 27 und die Längsachse m2 der Schaltstruktur 28 in einem Winkel α von etwa 90° zueinander angeordnet sind. In welchem Winkel die Längsachsen der Schaltstrukturen 28 und 28 zueinander stehen ist aber für die Erfindung nicht wesentlich. Es kommt darauf an, dass die Achse 24 derart bewegbar ist, dass die Stelleinrichtung 37 zwischen der Betätigungsposition und der Freigabeposition verstellbar ist.

Fig. 5 ist eine Darstellung auf die Verriegelungsvorrichtung 14 von unten. In Fig. 5 sind die Schnittlinien A bis E erkennbar.

Die Stelleinrichtung 37 mit der Achse 24, der Stellstruktur 25, der Schaltstruktur 27, der Schaltstruktur 28 und dem Rastelement 29 einer Positioniervorrichtung 36 ist in Fig. 6 dargestellt. Wie in Fig. 6 erkennbar ist, weist das Rastelement 29 zwei Seitenwände 31a und 31b zwischen denen ein Viereck ausgebildet ist, dessen Stirnflächen 32 bezüglich der Seitenwände 31a und 31b zurückversetzt ausgebildet sind.

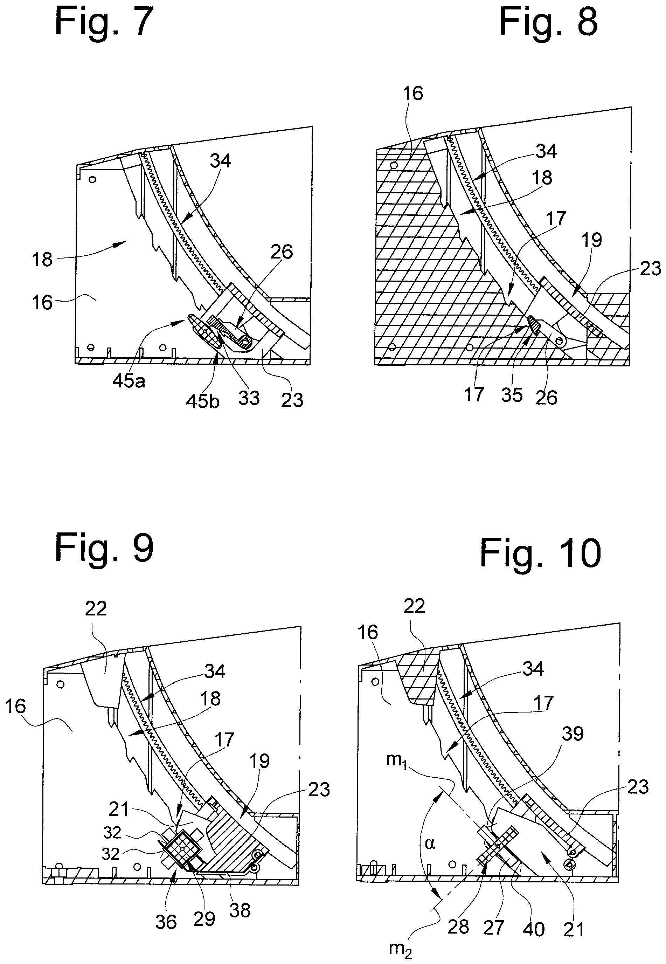

In Fig. 7 ist die Baugruppe 19 in einer ersten Endposition dargestellt, die bei dem Verstellteil 12 des vorliegenden Ausführungsbeispiels eine untere Endposition ist. In Fig. 7 ist eine Verzahnung 34 einer Bremsvorrichtung 43 erkennbar, die für die Erfindung lediglich eine untergeordnete Bedeutung hat. Mit dem Verstellteil 12 verbunden ist ein nur schematisch dargestelltes Zahnrad 44 (lediglich in Fig. 2b dargestellt - es sind nicht alle Zähne des Zahnrads gezeigt). Das Zahnrad 44 steht in Eingriff mit der Verzahnung 34. Die Bewegung des Zahnrades wird in Abhängigkeit der Drehrichtung des Zahnrades z.B. von einem Medium mit niedriger Viskosität verzögert, so dass eine Bewegung des Verstellteils 12 in Richtung der ersten Endposition, hier eine Abwärtsbewegung der Armauflage, verzögert wird. In entgegengesetzter Drehrichtung ist das Zahnrad ungebremst drehbar, d.h. eine Bewegung in Richtung der zweiten Endposition wird nicht von dem Zahnrad gebremst. Auf diese Weise kann sich das Verstellteil 12 in der Löseposition nicht schlagartig in die erste Endposition bewegen.

In Fig. 6 ist erkennbar, dass die Stellstruktur 25 Betätigungsbereiche 45a und 45b jeweils in Form eines Armes umfasst, die um 180° in Umfangsrichtung um die Schwenkachse a2 versetzt zueinander angeordnet sind. Die Schaltstrukturen 27 und 28 umfassen jeweils Betätigungsbereiche 46a und 46b, jeweils in Form eines Armes, die in Umfangsrichtung um die Schwenkachse a2 um 180° zueinander versetzt angeordnet sind. In diesem Ausführungsbeispiel werden lediglich die Betätigungsbereiche 45a und 46a verwendet. Die Betätigungsbereiche 45b und 46b kommen lediglich dann zum Einsatz, wenn sich die Stelleinrichtung unbeabsichtigt um 180 dreht, sind also redundant. Mit anderen Worten, die Stellstruktur 25 sowie die Schaltstrukturen 27 und 28 könnten auch jeweils lediglich einen Betätigungsbereich aufweisen.

In diesem Ausführungsbeispiel wird die Achse 24 jeweils um 90° gedreht, um einen Schaltvorgang zwischen der Riegelposition und der Löseposition durchzuführen. Je nach Ausbildung der Steuervorrichtung 20 können das Schaltelement 21 und die Schaltstruktur 27 sowie das Schaltelement 22 und die Schaltstruktur 28 auch derart zusammenwirken, dass die Achse 24 um einen anderen Drehwinkel schwenkt, um die Stelleinrichtung 37 zwischen der Betätigungsposition und der Freigabeposition zu schwenken.

Der Riegel 26 umfasst einen Kontaktbereich 33 und einen Riegelbereich 35. Gemäß Fig. 7 ist die Stelleinrichtung 37 in einer Freigabeposition angeordnet, in welcher die Stellstruktur 25 den Kontaktbereich 33 des Riegels 26 nicht betätigt. Der Riegel 26 wird daher von der Rückstelleinrichtung 30 in Eingriff mit der Anordnung 18 in der Riegelposition gehalten. Gemäß Fig. 8 befindet sich der Riegel 26 in Eingriff mit der untersten Aussparung 17 der Anordnung 18. In der Betätigungsposition der Stelleinrichtung 37 betätigt die Stellstruktur 25 den Kontaktbereich 33 des Riegels 26 derart, dass der Riegel 26 entgegen der Kraft der Rückstelleinrichtung 30 außer Eingriff mit der Anordnung 18, d.h. außer Eingriff mit den Aussparungen 17 gehalten wird.

Der Riegel 26 verbleibt stabil in der jeweiligen Position aufgrund der Positioniervorrichtung 36 (siehe Fig. 9), welche die Stelleinrichtung 37 im vorliegenden Ausführungsbeispiel in vier verschiedenen Positionen halten kann. Die Stelleinrichtung 37 wird stabil in der Riegelposition, in welcher der Betätigungsbereich 45a mit dem Kontaktbereich 33 des Riegels 26 in Eingriff steht, in der Riegelposition, in welcher der Betätigungsbereich 45b mit dem Kontaktbereich 33 in Eingriff steht und in den beiden Positionen gehalten, in denen die Stellstruktur 25 nicht mit dem Kontaktbereich 33 in Eingriff steht. Wie oben bereits erwähnt, werden lediglich zwei Positionen der Positioniervorrichtung 36 verwendet, nämlich eine Betätigungsposition und eine Freigabeposition und die andere Betätigungsposition sowie die andere Freigabeposition sind redundant.

Die Positioniervorrichtung 36 umfasst eine Rastfeder 38, welche mit den vier Stirnflächen 32 des Rastelements 29 zusammenwirkt, um die Stelleinrichtung 37 in der eingestellten Position zu halten. Die Stirnflächen 32 sind bezüglich der Seitenwände 31a und 31b zurückversetzt angeordnet. Die Seitenwände 31a und 31b stellen damit eine Führung für die Rastfeder 38 bezüglich der Richtungen parallel zu der Drehachse a2 dar.

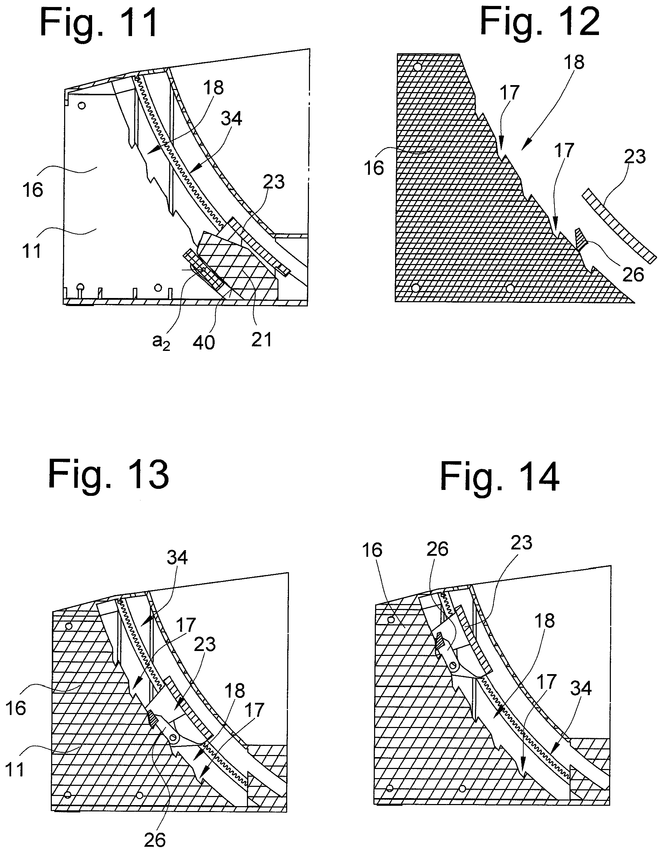

In Fig. 5 sowie in den Fig. 10 und 11 ist erkennbar, dass das Schaltelement 21 und die Schaltstruktur 27 sowie das Schaltelement 22 und die Schaltstruktur 28 jeweils in unterschiedlichen Ebenen angeordnet sind. In Fig. 10 ist zu sehen, dass sich deshalb die Schaltstruktur 28 an dem Schaltelement 21 vorbeibewegen kann, während die Schaltstruktur 27 von dem Schaltelement 21 in eine Position verstellt wurde, in welcher sie die Stelleinrichtung 37 in die Freigabeposition stellt. Dabei wirken eine Außenfläche 39 der Schaltstruktur 27 und eine Steuerfläche 40 des Schaltelements 21 zusammen.

Die Aussparungen 17 sind derart geformt, dass sie in Bewegungsrichtung u1 mittels einer Schrägfläche 47 und in Bewegungsrichtung u2 mittels einer Steilfläche 48 begrenzt sind. Der Riegelbereich 35 ist mit einer komplementären Form versehen, so dass sich der Riegel 26 in der Riegelposition der Verriegelungsvorrichtung 14 in Richtung u1 über die Anordnung bewegen kann, d.h. der Riegel 26 kann aus dem Eingriff mit einer Aussparung 17 mit einer leichten Betätigungskraft an dem Verstellteil 12 in Richtung u1 gelöst werden. Wenn sich der Riegel 26 in einer Aussparung 17 befindet, wird hingegen eine Bewegung in Richtung u2 verhindert. D.h., das Verstellteil 12 kann in der Riegelposition nicht in Richtung u2 bewegt werden, wenn der Riegel 26 in Eingriff mit einer Aussparung 17 ist.

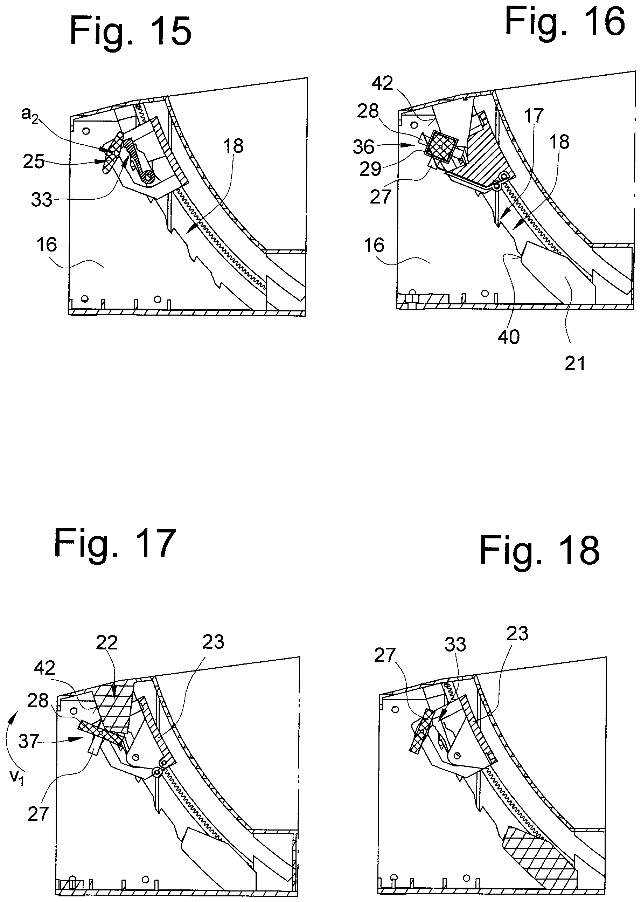

Gemäß der Fig. 12 bis 14 wird das Verstellteil 12 in Richtung u1 bewegt, wobei sich der Riegel 26 über die Anordnung 18 bewegt. Gemäß Fig. 13 ist der Riegel 26 in einer mittleren Position des Verstellteils 12 in Eingriff mit einer Aussparung 17 dargestellt. Wird das Verstellteil 12 soweit in Richtung u1 bewegt, dass eine Außenfläche 41 der Schaltstruktur 28 mit einer Steuerfläche 42 des Schaltelements 22 in Kontakt gerät (siehe die Fig. 14 bis 18), entsteht ein Moment um die Drehachse a2 in der Baugruppe 37 in Drehrichtung v1 (siehe Fig. 17), welche die Achse 24 entgegen der Kraft der Feder 38 der Positioniervorrichtung 36 in Richtung v1 dreht.

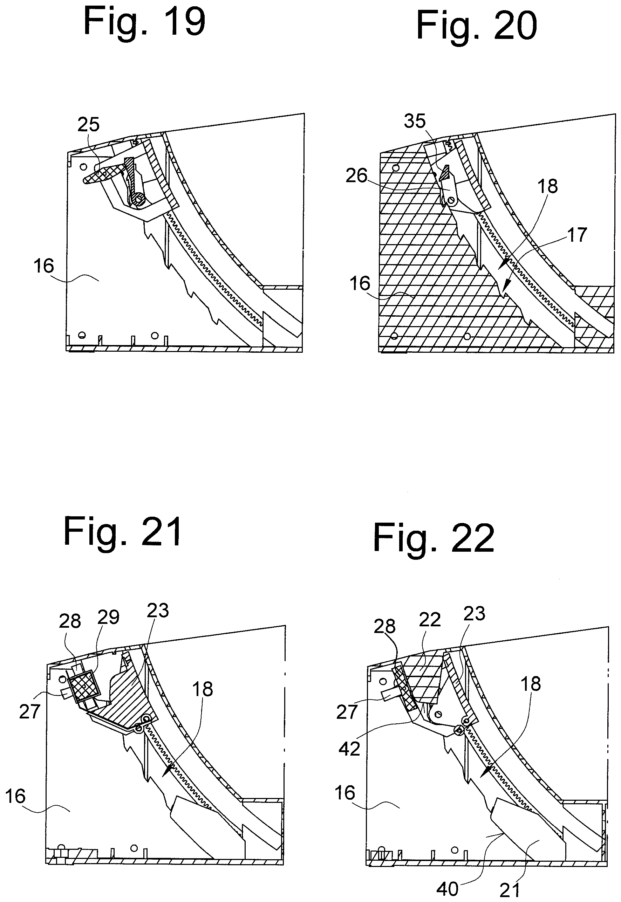

Bei weiterer Bewegung des Verstellteils 12 in Richtung u1 verrastet die Rastfeder 38 mit dem Rastelement 29 in einer bezüglich Fig. 7 um 90° gedrehten Position (siehe die Fig. 19 bis 23), in welcher sich die Stelleinrichtung 37 in einer Betätigungsposition befindet, in der die Stellstruktur 25 den Riegel 26 gemäß Fig. 19 außer Eingriff mit der Anordnung 18 bewegt. In dieser Löseposition der Verriegelungsvorrichtung 13 kann das Verstellteil 12 in Richtung u1 und u2 bewegt werden, da der Riegel 26 außer Eingriff mit der Anordnung 18 steht.

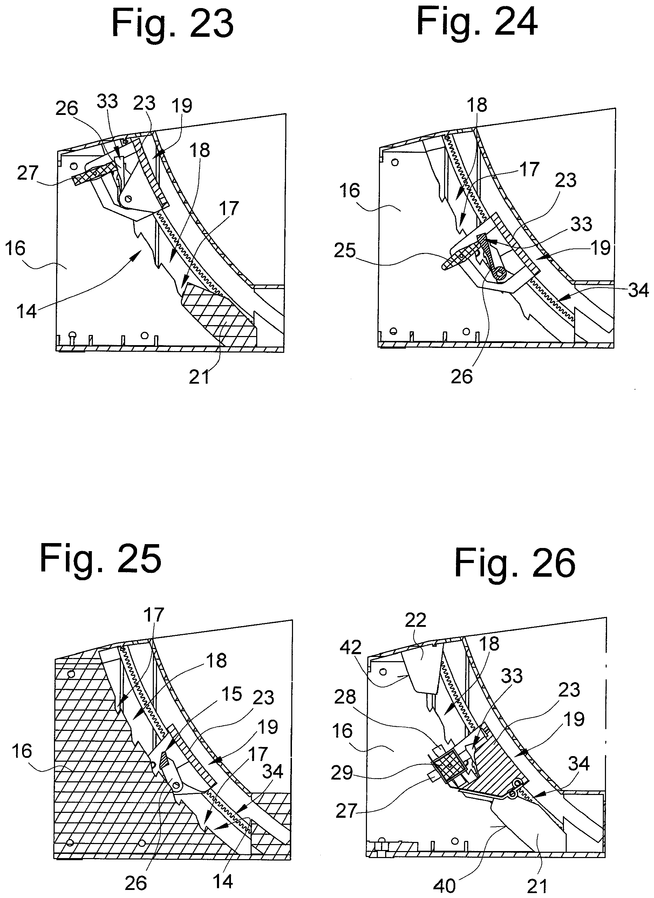

Gemäß der Fig. 24 bis 28 wurde das Verstellteil 12 in Richtung u2 bewegt und befindet sich in einer Zwischenposition zwischen der zweiten Endposition und der ersten Endposition.

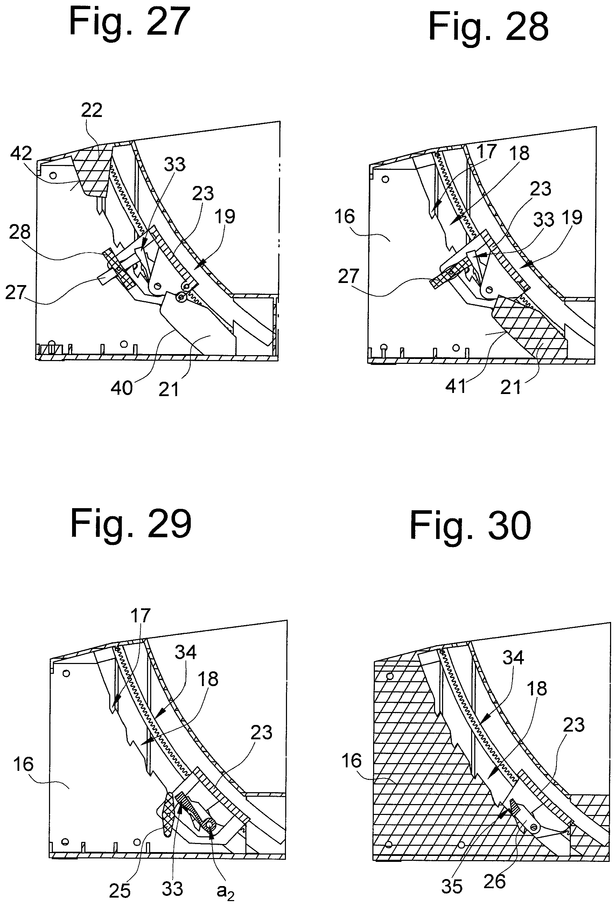

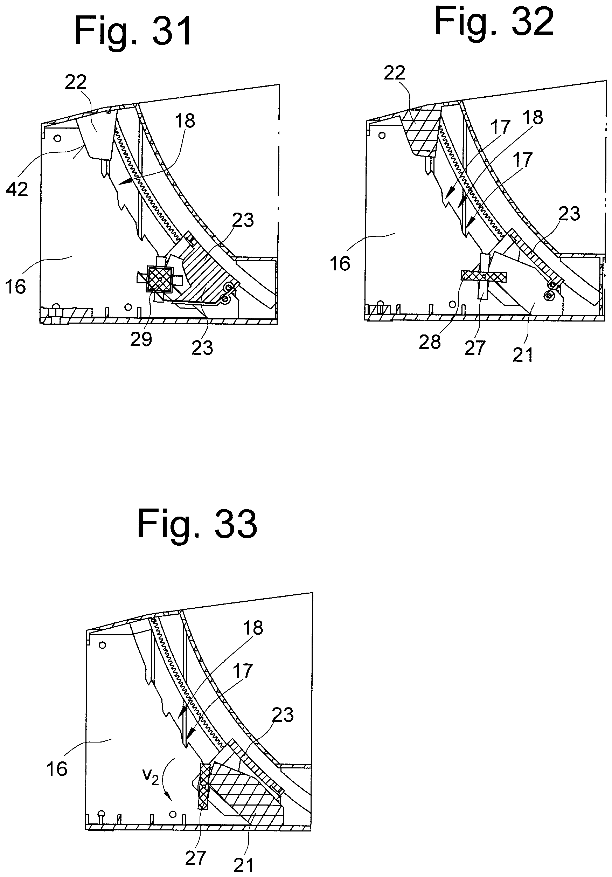

Wenn das Verstellteil 12 soweit in Richtung u2 bewegt wurde, dass die Außenfläche 39 der Schaltstruktur 27 mit der Steuerfläche 40 des Schaltelements 21 in Kontakt gerät (sieh Fig. 29 bis 33), entsteht ein Moment in Richtung v2 um die Schwenkachse a2, welches die Achse 24 um 90° in Richtung v2 in eine unbetätigte Position schwenkt, wobei die Stellstruktur 25 den Riegel 26 nicht mehr entgegen der Kraft der Rückstellvorrichtung 30 außer Eingriff mit der Anordnung 18 hält. Die Positioniervorrichtung 36 hält die Stelleinrichtung 37 in dieser Position. Der Riegel 26 wird daher von der Rückstellvorrichtung 30 in Eingriff mit der Anordnung 18 belastet (siehe die Fig. 7 bis 11). Die Verriegelungsvorrichtung 13 befindet sich dann in der Riegelposition.

Ein zweites Ausführungsbeispiel einer Ausstattungsvorrichtung 10' ist in den Fig. 34 und 35 dargestellt. Bei dem zweiten Ausführungsbeispiel handelt es sich um eine Umkehrung der Zuordnung der Anordnung 18 sowie der Stellelemente 21 und 22 und der Baugruppe 19. Die aus dem ersten Ausführungsbeispiel bekannten Merkmale wurden mit einem Hochkomma versehen. Die Funktionen der Vorrichtung des zweiten Ausführungsbeispiels sind identisch mit den Funktionen des ersten Ausführungsbeispiels.

In dem zweiten Ausführungsbeispiel ist die Anordnung 18' mit den Aussparungen 17' der ersten Verriegelungsmittel 15 der Verriegelungsvorrichtung 13' an einer Wand 51 ausgebildet, die fest mit dem um die Schwenkachse a1' in die Richtungen u1 und u2 schwenkbaren Verstellteil 12', in diesem Fall einer schwenkbaren Armauflage, verbunden ist. Das Verstellteil 12' ist lediglich schematisch in Form einer gestrichelten Linie dargestellt. Auch die Schaltelemente 21' und 22' der Steuervorrichtung 20' sind fest mit der Wand 51 verbunden.

Die Anordnung 18' unterscheidet sich lediglich in der Hinsicht von dem ersten Ausführungsbeispiel, dass die Schrägfläche 47' und die Steilfläche 48' an umgekehrten Seiten der Aussparung 17' ausgebildet sind. Die Baugruppe 19' der zweiten Verriegelungsmittel 14 ist im Wesentlichen, wie bei dem ersten Ausführungsbeispiel ausgebildet, das Halteelement 23' ist aber fest an der Basis 11' befestigt, die auch in diesem Fall von dem Körper einer Mittelkonsole gebildet ist. Darüber hinaus ist der Riegelbereich 35' des um die Schwenkachse a3' schwenkbaren Riegels 26' komplementär zu der Aussparung 17' ausgebildet, so dass das Verstellteil 12' in der Riegelposition der Verriegelungsvorrichtung 13' in Richtung u1 bewegbar ist, in in Richtung u2 aber unbewegbar verriegelt ist. Die Rückstelleinrichtung 30' ist in Fig. 35 lediglich mittels einer gestrichelten Linie angedeutet. Ferner sind in Fig. 35 das um die Schwenkachse a3' schwenkbar angeordnete Rastelement 29' sowie die Feder 38' der Positioniervorrichtung 36' zu erkennen.

## Patentansprüche

1. Ausstattungsvorrichtung eines Fahrzeugs mit einer Basis (11) und einem relativ zu der Basis translatorisch und / oder rotatorisch bewegbaren Verstellteil (12), welches entlang einer Bahn zwischen einer ersten Endposition und einer zweiten Endposition bewegbar ist und mit einer Verriegelungsvorrichtung (13) mit dem Verstellteil (12) zugeordneten ersten Verriegelungsmitteln und der Basis (11) zugeordneten zweiten Verriegelungsmitteln in wenigstens einer Position verriegelbar ist, mit einer Steuervorrichtung (20) mit dem Verstellteil (12) zugeordneten ersten Steuermitteln und der Basis (11) zugeordneten zweiten Steuermitteln, mit welchen die Verriegelungsvorrichtung (13) in Abhängigkeit der Position des Verstellteils (12) zwischen einer Riegelposition und einer Löseposition verstellbar ist, **dadurch gekennzeichnet, dass** die einen Steuermittel ein an einem ersten Endbereich der Bahn angeordnetes erstes Schaltelement (21) und ein an einem zweiten Endbereich angeordnetes zweites Schaltelement (22) umfassen, wobei mittels jedes Schaltelements (21, 22) eine bewegbare Stelleinrichtung (37) der anderen Steuermittel derart betätigbar ist, dass mit der Stelleinrichtung (37) wirkverbundene Verriegelungsmittel zwischen einer Riegelposition und einer Löseposition bewegbar sind.

2. Ausstattungsvorrichtung nach Anspruch 1, **dadurch gekennzeichnet, dass** die Stelleinrichtung (37) zwischen einer Betätigungsposition, in welcher die Verriegelungsmittel in der Löseposition und einer Freigabeposition, in welcher die Verriegelungsmittel in der Riegelposition angeordnet sind, bewegbar ist.

3. Ausstattungsvorrichtung nach einem der vorangehenden Ansprüche, **dadurch gekennzeichnet, dass** die Stelleinrichtung (37) wenigstens eine Stellstruktur (25) umfasst, die mit den Verriegelungsmitteln zusammenwirkt, und wenigstens eine Schaltstruktur (27, 28) umfasst, die mit wenigstens einem Schaltelement (21, 22) zusammenwirkt, wobei die Stellstruktur (25) und die Schaltstruktur (27, 28) miteinander bewegungsverbunden sind.

4. Ausstattungsvorrichtung nach einem der vorangehenden Ansprüche, **dadurch gekennzeichnet, dass** eine erste Schaltstruktur (27) mit einem ersten Schaltelement (21) und eine zweite Schaltstruktur (28) mit einem zweiten Schaltelement (22) der Stelleinrichtung (37) zusammenwirkt.

5. Ausstattungsvorrichtung nach einem der vorangehenden Ansprüche, **dadurch gekennzeichnet, dass** die Stelleinrichtung (37) drehbar ausgebildet ist.

6. Ausstattungsvorrichtung nach einem der vorangehenden Ansprüche, **dadurch gekennzeichnet, dass** die Stelleinrichtung (37) wenigstens zwei Stellstrukturen (25a, 25b) und / oder wenigstens zwei Schaltstrukturen (27a, 27b, 28a, 28b) umfasst, die in Umfangsrichtung um die Drehachse (a2) zueinander versetzt angeordnet sind.

7. Ausstattungsvorrichtung nach einem der vorangehenden Ansprüche, **dadurch gekennzeichnet, dass** die Stelleinrichtung (37) wenigstens zwei Stellstrukturen und / oder wenigstens zwei Schaltstrukturen (27a, 27b, 28a, 28b) umfasst, die in Richtung parallel zu der Drehachse (a2) zueinander versetzt angeordnet sind.

8. Ausstattungsvorrichtung nach einem der vorangehenden Ansprüche, **dadurch gekennzeichnet, dass** die Stelleinrichtung (37) wenigstens einen Teil einer Positioniervorrichtung (36) umfasst, welche die Stelleinrichtung (37) in der jeweils eingestellten Position hält.

9. Ausstattungsvorrichtung nach einem der vorangehenden Ansprüche, **dadurch gekennzeichnet, dass** die Positioniereinrichtung (36) von einer Rastvorrichtung gebildet ist, die erste Rastmittel in Form einer Feder (38) und zweite Rastmittel in Form eines Rastsitzes (32) für die Feder (38) umfasst, wobei die einen Rastmittel mit der Stelleinrichtung (37) bewegungsverbunden sind und die anderen Rastmittel mit dem Verstellteil (12) oder mit der Basis (11) fest verbunden sind.

10. Ausstattungsvorrichtung nach einem der vorangehenden Ansprüche, **dadurch gekennzeichnet, dass** eine Bremsvorrichtung (43) vorgesehen ist, welche die Bewegung des Verstellteils (12) in wenigstens eine Richtung (u2) bremst.

11. Ausstattungsvorrichtung nach einem der vorangehenden Ansprüche, **dadurch gekennzeichnet, dass** die Ausstattungsvorrichtung eine Fahrzeugarmlehne (10) ist und das Verstellteil (12) eine Armauflage ist, die relativ zu einer karosseriefesten Basis (11) bewegbar ist.

## Claims

1. Equipment device of a vehicle, with a base (11) and an adjustment part (12), movable in translation and/or in rotation relative to the base, which is movable along a path between a first end position and a second end position and can be locked in at least one position with a locking device (13) with first locking means which are associated with the adjustment part (12) and second locking means which are associated with the base (11), with a control device (20) with first control means which are associated with the adjustment part (12) and second control means which are associated with the base (11), with which control means the locking device (13) is adjustable between a catch position and a release position depending on the position of the adjustment part (12), **characterized in that** the one set of control means comprises a first switching element (21) arranged on a first end region of the path and a second switching element (22) arranged on a second end region, wherein a movable setting device (37) of the other set of control means can be actuated by means of each switching element (21, 22) in such a way that locking means which are in an operative connection with the setting device (37) are movable between a catch position and a release position.

2. Equipment device according to claim 1, **characterized in that** the setting device (37) is movable between an actuation position, in which the locking means are arranged in the release position, and an enabling position, in which the locking means are arranged in the catch position.

3. Equipment device according to one of the preceding claims, **characterized in that** the setting device (37) comprises at least one setting structure (25) which cooperates with the locking means, and at least one switching structure (27, 28), which cooperates with at least one switching element (21, 22), wherein the setting structure (25) and the switching structure (27, 28) are motionally connected to one another.

4. Equipment device according to one of the preceding claims, **characterized in that** a first switching structure (27) cooperates with a first switching element (21), and a second switching structure (28) cooperates with a second switching element (22) of the setting device (37).

5. Equipment device according to one of the preceding claims, **characterized in that** the setting device (37) is configured to be rotatable.

6. Equipment device according to one of the preceding claims, **characterized in that** the setting device (37) comprises at least two setting structures (25a, 25b) and/or at least two switching structures (27a, 27b, 28a, 28b) which are arranged offset to each other in the peripheral direction about the axis of rotation (a2).

7. Equipment device according to one of the preceding claims, **characterized in that** the setting device (37) comprises at least two setting structures and/or at least two switching structures (27a, 27b, 28a, 28b) which are arranged offset to each other in a direction parallel to the axis of rotation (a2).

8. Equipment device according to one of the preceding claims, **characterized in that** the setting device (37) comprises at least one part of a positioning device (36) which holds the setting device (37) in the position set in each case.

9. Equipment device according to one of the preceding claims, **characterized in that** the positioning device (36) is formed by a latching device which comprises first latching means in the form of a spring (38) and second latching means in the form of a latching seat (32) for the spring (38), wherein the one set of latching means are motionally connected to the setting device (37) and the other set of latching means are connected fixedly to the adjustment part (12) or to the base (11).

10. Equipment device according to one of the preceding claims, **characterized in that** a braking device (43) is provided which brakes the movement of the adjustment part (12) in at least one direction (u2).

11. Equipment device according to one of the preceding claims, **characterized in that** the equipment device is a vehicle armrest (10) and the adjustment part (12) is an arm support which is movable relative to a body-mounted base (11).

## Revendications

1. Dispositif d'équipement de véhicule avec un socle (11) et un élément de réglage (12) mobile en translation et/ou en rotation par rapport au socle, lequel peut se déplacer le long d'une piste entre une première position d'extrémité et une deuxième position d'extrémité et peut être verrouillé à l'aide d'un dispositif de verrouillage (13) doté de premiers moyens de verrouillage associés à l'élément de réglage (12) et de deuxièmes moyens de verrouillage associés au socle (11) dans au moins une position, avec un dispositif de commande (20) doté de premiers moyens de commande associés à l'élément de réglage (12) et de deuxième moyens de commande associés au socle (11), avec lesquels le dispositif de verrouillage (13) peut être réglé en fonction de la position de l'élément de réglage (12) entre une position de verrouillage et une position de libération, **caractérisé en ce que** les moyens de commande comprennent un premier élément de commutation (21) agencé au niveau d'une première zone d'extrémité de la piste et un deuxième élément de commutation (22) agencé au niveau d'une deuxième zone d'extrémité de piste, un dispositif de réglage mobile (37) des autres moyens de commande pouvant être activé au moyen de chacun des éléments de commutation (21, 22) de sorte que des moyens de verrouillage reliés de façon active au dispositif de réglage (37) peuvent être déplacés entre une position de verrouillage et une position de libération.

2. Dispositif d'équipement selon la revendication 1, **caractérisé en ce que** le dispositif de réglage (37) peut être déplacé entre une position d'activation dans laquelle les moyens de verrouillage sont mis en position de libération et une position de libération dans laquelle les moyens de verrouillage sont mis en position de verrouillage.

3. Dispositif d'équipement selon une des revendications précédentes, **caractérisé en ce que** le dispositif de réglage (37) comprend au moins une structure de réglage (25) qui coopère avec les moyens de verrouillage et au moins une structure de commutation (27, 28) qui coopère avec au moins un élément de commutation (21, 22), la structure de réglage (25) et la structure de commutation (27, 28) étant solidaires en mouvement entre elles.

4. Dispositif d'équipement selon une des revendications précédentes, **caractérisé en ce qu'**une première structure de commutation (27) coopère avec un premier élément de commutation (21) et une deuxième structure de commutation (28) avec un deuxième élément de commutation (22) du dispositif de réglage (37).

5. Dispositif d'équipement selon une des revendications précédentes, **caractérisé en ce que** le dispositif de réglage (37) est conçu de façon pivotante.

6. Dispositif d'équipement selon une des revendications précédentes, **caractérisé en ce que** le dispositif de réglage (37) comprend au moins deux structures de réglage (25a, 25b) et/ou au moins deux structures de commutation (27a, 27b, 28a, 28b) qui sont disposées de façon décalée entre elles dans une direction circonférentielle autour de l'axe de rotation (a2).

7. Dispositif d'équipement selon une des revendications précédentes, **caractérisé en ce que** le dispositif de réglage (37) comprend au moins deux structures de réglage et/ou au moins deux structures de commutation (27a, 27b, 28a, 28b) qui sont disposées de façon décalée entre elles dans une direction parallèle à l'axe de rotation (a2).

8. Dispositif d'équipement selon une des revendications précédentes, **caractérisé en ce que** le dispositif de réglage (37) comprend au moins une partie d'un dispositif des positionnement (36) qui maintient le dispositif de réglage (37) dans la position réglée actuelle.

9. Dispositif d'équipement selon une des revendications précédentes, **caractérisé en ce que** le dispositif de positionnement (36) est constitué par un dispositif d'encliquetage qui comprend des premiers moyens d'encliquetage sous la forme d'un ressort (38) et des deuxièmes moyens d'encliquetage sous la forme d'un logement d'encliquetage (32) pour le ressort (38), les uns moyens d'encliquetage étant solidaires en mouvement avec le dispositif de réglage (37) et les autres moyens d'encliquetage étant reliés de façon fixe à l'élément de réglage (12) ou au socle (11).

10. Dispositif d'équipement selon une des revendications précédentes, **caractérisé en ce qu'**il est prévu une dispositif de freinage (43) qui freine le déplacement du dispositif de réglage (12) dans au moins une direction (u2).

11. Dispositif d'équipement selon une des revendications précédentes, **caractérisé en ce que** ce dispositif d'équipement est un accoudoir de véhicule (10) et que l'élément de réglage (12) est un appuie-bras qui est mobile par rapport à un socle (11) fixé à la carrosserie.
